# EUROPÄISCHE PATENTSCHRIFT

(11) **EP 3 894 816 B1**
(45) Veröffentlichungstag und Bekanntmachung des Hinweises auf die Patenterteilung: **07.02.2024**
(21) Anmeldenummer: 19824244.8
(22) Anmeldetag: 10.12.2019
(51) Int. Cl.: G01L 3/10, B62D 6/10, G01L 5/22

(54) **MAGNETISCHE ABSCHIRMUNG EINES DREHMOMENTSENSORS FÜR EINE ELEKTROMECHANISCHE HILFSKRAFTLENKUNG EINES KRAFTFAHRZEUGS**
MAGNETIC SHIELDING OF A TORQUE SENSOR FOR AN ELECTROMECHANICAL POWER STEERING SYSTEM IN A MOTOR VEHICLE
BLINDAGE MAGNÉTIQUE D'UN CAPTEUR DE COUPLE POUR UNE DIRECTION ASSISTÉE ÉLECTROMÉCANIQUE D'UN VÉHICULE À MOTEUR

(30) Priorität: 11.12.2018 DE 102018131712
(43) Veröffentlichungstag der Anmeldung: 20.10.2021
(73) Patentinhaber: thyssenkrupp Presta AG, 9492 Eschen (LI); thyssenkrupp AG, 45143 Essen (DE)
(72) Erfinder: AYER, Roman, 9470 Buchs (CH); DONA, Michael, 6713 Ludesch (AT); KNOLL, Peter, 88131 Lindau (DE)
(74) Vertreter: thyssenkrupp Intellectual Property GmbH
(86) Internationale Anmeldenummer: PCT/EP2019/084383
(87) Internationale Veröffentlichungsnummer: WO 2020/120452

(56) Entgegenhaltungen:
- DE-A1- 10 347 144
- US-A1- 2003 209 087
- US-A1- 2010 313 681

## Beschreibung

Die vorliegende Erfindung betrifft ein elektromechanisches Lenksystem für ein Kraftfahrzeug mit einer Drehmomentsensoreinheit mit den Merkmalen des Oberbegriffs des Anspruchs 1.

Drehmomentsensoren werden in einem Kraftfahrzeug dazu eingesetzt, das von einem Fahrer in das Lenkrad eingeleitete Drehmoment zu messen. Derzeit verwendete Drehmomentsensoren sind magnetische Sensoren, deren Messung sehr leicht durch externe Magnetfelder gestört werden kann. Kraftfahrzeuge werden in Zukunft und zum Teil schon jetzt, vollständig oder teilweise elektrisch betrieben, was zu hohen externen Feldbeeinflussungsmessungen durch hochstromführende Kabel führen kann, die sich häufig in der Nähe des Lenksystems befinden.

Aus dem Stand der Technik ist eine Reihe an Drehmomentsensoren bekannt, die eine magnetische Abschirmung aufweisen.

Die Patentschrift US 7,021,161 B2 offenbart einen Lenkwinkelsensor, der ein mit einer oberen Lenkwelle verbundenes erstes Zahnrad aufweist, das in Eingriff mit einem zweiten kleineren Zahnrad steht, wobei das kleinere Zahnrad von einer Abschirmung umgeben ist, die eine Aussparung für das erste Zahnrad aufweist. Die Abschirmung begrenzt das magnetische Feld des Sensors des zweiten Zahnrades.

Aus den Offenlegungsschriften EP 3 276 317 A1, EP 3 276 318 A1 und EP 3 239 678 A1 sind Drehmomentsensoreinheiten mit einer im Querschnitt C-förmigen, magnetischen Abschirmung bekannt, die auf der unteren Lenkwelle angeordnete Magnetflussleiter umfangseitig umgibt.

Ferner ist aus der US 2003/0209087 A1 ein elektrisches Servolenkungssystem zum Lenken eines Fahrzeugrades bekannt, das einen Drehmomentsensor zum Erfassen von Torsionsdrehmoment umfasst. Der Drehmomentsensor weist einen Drehstab, der an den Eingangs- und Ausgangswellen koaxial ausgerichtet ist, einen ringförmigen Magneten, ein Paar Magnetjoche und einen Magnetsensor zum Erfassen der magnetischen Flussdichte auf. Eine magnetische Abschirmung deckt dabei zumindest den äußeren Umfang des Magnetsensors ab.

Die US 2010/0313681 A1 offenbart zudem eine Sensoranordnung zum Messen eines an einer Welle anliegenden Drehmoments, die insbesondere zur Verwendung in einem Lenksystem vorgesehen ist. Die Sensoranordnung ist dabei ähnlich ausgestaltet, wie in der US 2003/0209087 A1, wobei die Sensoranordnung von einem Gehäuse umgeben ist. In einem Deckel, der den Magnetsensor umfasst, ist dabei zur magnetischen Abschirmung eine Stahlplatte integriert.

Aus der DE 103 47 144 A1 ist zudem eine Lenksäule mit einer teleskopierbaren Lenkwelle bekannt.

Es ist Aufgabe der vorliegenden Erfindung ein elektromechanisches Lenksystem mit einer Drehmomentsensoreinheit anzugeben, das einen verringerten Einfluss eines vorhandenen externen magnetischen Störfeldes auf die Ermittlung des Drehmomentwertes hat und damit einhergehend eine erhöhte Genauigkeit der Drehmomentsensoreinheit aufweist.

Diese Aufgabe wird von einem elektromechanischen Lenksystem mit den Merkmalen des Anspruchs 1 gelöst. Vorteilhafte Weiterbildungen ergeben sich aus den Unteransprüchen.

Demnach ist ein elektromechanisches Lenksystem für ein Kraftfahrzeug vorgesehen, umfassend ein mit einer zweiten Teilwelle verbundenes Lenkritzel, welches mit einer in einem dritten Gehäuse entlang einer Längsachse verschieblich gelagerten Zahnstange zur Lenkung von Rädern in Eingriff steht, wenigstens einen Elektromotor zur Lenkkraftunterstützung, eine Drehmomentsensoreinheit, die zwischen einer mit dem Lenkrad verbundenen ersten Teilwelle und der zweiten Teilwelle angeordnet ist und ein vom Fahrer in das Lenkrad eingebrachtes Drehmoment erfasst. Erfindungsgemäß ist eine die erste Teilwelle und die zweite Teilwelle umfassende Lenksäule teleskopierbar, wobei die Lenksäule ein äußeres Mantelrohr sowie ein inneres Mantelrohr aufweist.

Die Drehmomentsensoreinheit umfasst:
- einen drehfest mit der ersten Teilwelle verbindbaren Ringmagneten,
- wenigstens ein mit der zweiten Teilwelle verbindbares Magnetjoch, das in einem von dem Ringmagneten ausgehenden magnetischen Feld angeordnet ist,
- wenigstens zwei mit der zweiten Teilwelle verbindbare Magnetflussleiter, die die von dem wenigstens einen Magnetjoch erzeugten magnetischen Flüsse leiten,
- eine Sensoreinheit mit einem ersten Gehäuse, die eine Drehwinkeländerung zwischen den Teilwellen durch Messung der zwischen den Magnetflussleitern erzeugten magnetischen Flussdichte detektiert,
- ein zweites Gehäuse, dass den Ringmagneten, das wenigstens eine Magnetjoch, die wenigstens zwei Magnetflussleiter und die Sensoreinheit umgibt und dass eine Gehäuseöffnung aufweist, die von einem Gehäusedeckel zumindest teilweise verschlossen ist, vorgesehen, wobei das zweite Gehäuse und der Gehäusedeckel aus einem magnetisch leitenden Material zur magnetischen Abschirmung der Drehmomentsensoreinheit gefertigt sind.

Da die gesamte Drehmomentsensoreinheit von dem Gehäuse umgeben ist, kann diese vor störenden externen Magnetfeldern geschützt werden. Erfindungsgemäß weist der Gehäusedeckel eine Ausnehmung auf, die von der ersten Teilwelle im eingebauten Zustand durchsetzt ist und in die ein inneres Mantelrohr aufgenommen ist, wobei das innere Mantelrohr ebenfalls aus einem magnetisch leitenden Werkstoff zur magnetischen Abschirmung der Drehmomentsensoreinheit gefertigt ist. Die Abschirmung erstreckt sich somit rundherum um die Drehmomentsensoreinheit und ist magnetisch abgedichtet.

Vorzugsweise ist das innere Mantelrohr mit dem Gehäusedeckel verschweißt. In einer bevorzugten Ausführungsform weist das weichmagnetische Material der Abschirmung eine hohe magnetische Leitfähigkeit und eine kleine Koerzitivfeldstärke, insbesondere ferritischen Stahl auf.

In einer bevorzugten Ausführungsform weist die Sensoreinheit wenigstens einen Magnetflussleiter und einen auf einer Leiterplatte angeordneten Magnetsensor auf, die in einem ersten Gehäuse untergebracht sind. Es kann auch vorgesehen sein, dass die Sensoreinheit mit einem Untersetzungsgetriebe, nach dem Noniusprinzip funktioniert. Vorzugsweise ist der Gehäusedeckel mittels Schrauben an einer Außenwand des zweiten Gehäuses befestigt. Das Sensorgehäuse (erste Gehäuse) ist ebenfalls bevorzugt mittels Schrauben im Inneren des zweiten Gehäuses, an einer Grundplatte des zweiten Gehäuses befestigt.

In einer vorteilhaften Ausführungsform weist das zweite Gehäuse eine Gehäuseöffnung im Bereich des Sensorelementes zur Durchführung von einer Datenleitung und/oder einer Stromversorgung zur Befestigung an dem Sensorelement auf.

An einer der öffnungfernen Seite der Grundplatte des zweiten Gehäuses kann ein Flansch zur Befestigung des zweiten Gehäuses an einem Getriebegehäuse angebracht sein.

In einer bevorzugten Ausführungsform ist der Elektromotor an der Lenksäule angeordnet und leitet mittels eines in dem Getriebegehäuse angeordneten Getriebes eine Hilfskraftunterstützung in die untere Teilwelle ein.

Nachfolgend wird ein Ausführungsbeispiel der vorliegenden Erfindung anhand der Zeichnungen beschrieben. Gleiche Bauteile oder Bauteile mit gleichen Funktionen tragen gleiche Bezugszeichen. Es zeigen:
- Figur 1:: eine räumliche Ansicht einer Drehmomentsensoreinheit und eines Lenkwinkelsensors mit Sensorgehäuse,
- Figur 2:: eine Draufsicht auf eine Stirnseite des Gehäuses der Drehmomentsensoreinheit,
- Figur 3:: einen Schnitt durch das in Figur 2 dargestellt Gehäuse der Drehmomentsensoreinheit entlang der Linie A-A,
- Figur 4:: einen Schnitt durch das in Figur 2 dargestellt Gehäuse der Drehmomentsensoreinheit entlang der Linie B-B,
- Figur 5:: drei Detailansichten der in Figur 4 dargestellten Bereiche Y,X,W,
- Figur 6:: einen Schnitt durch das in Figur 2 dargestellt Gehäuse der Drehmomentsensoreinheit entlang der Linie C-C,
- Figur 7:: einen Schnitt durch das in Figur 2 dargestellt Gehäuse der Drehmomentsensoreinheit entlang der Linie D-D,
- Figur 8:: eine weitere Draufsicht auf die Stirnseite des Gehäuses der Drehmomentsensoreinheit,
- Figur 9:: eine Detailansicht des in Figur 8 dargestellten Bereichs U, sowie
- Figur 10:: eine Detailansicht des in Figur 8 dargestellten Bereichs V.

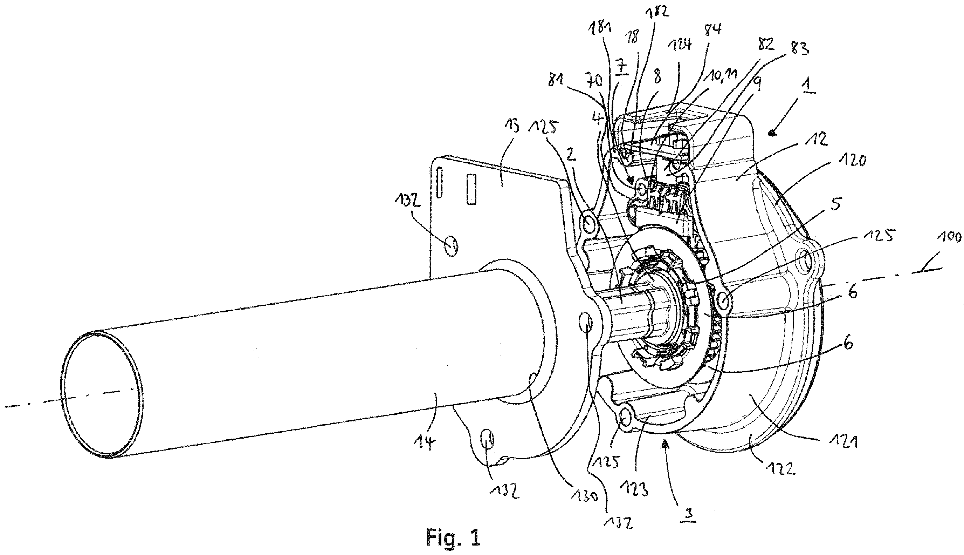

In Figur 1 ist eine Drehmomentsensoreinheit 1 dargestellt, die eine Verdrehung einer oberen Lenkwelle 2 gegenüber einer nicht dargestellten unteren Lenkwelle als ein Maß des an der oberen Lenkwelle 2 oder eines mit der oberen Lenkwelle 2 verbundenen Lenkrades von einem Fahrer manuell ausgeübten Drehmomentes misst. Die obere Lenkwelle 2 und die untere Lenkwelle sind drehelastisch über einen nicht gezeigten Drehstab miteinander gekoppelt. Eine Drehmomentsensoreinheit 1 weist einen Drehwinkelsensor auf, der auch als Drehmomentsensor bezeichnet wird. In Abhängigkeit des von der Drehmomentsensoreinheit 1 gemessen Drehmoments stellt eine Servoeinheit eine Lenkunterstützung für den Fahrer bereit.

Die Drehmomentsensoreinheit 1, ist Teil einer integralen Baueinheit, die eine Lenkwinkelsensoreinheit 3 umfasst. Die Lenkwinkelsensoreinheit 3 misst den aktuellen Lenkwinkel der unteren Lenkwelle.

Die Drehmomentsensoreinheit 1 weist einen drehfest mit der oberen Lenkwelle 2 verbunden Ringmagneten (Permanentmagneten) 4 mit einer Vielzahl an Polen auf. Ein Satz von Magnetjochen 5, der an der unteren Lenkwelle befestigt ist, ist in einem von dem Vielpolmagnet 4 erzeugten Magnetfeld angeordnet. Jedes der Magnetjoche 5 ist aus einem weichmagnetischen Material hergestellt und weist eine Mehrzahl von Klauenpolen auf, die in Umfangsrichtung äquidistant angeordnet sind. Magnetjoche 5 sind so angeordnet, dass ihre Klauenpole ineinandergreifen. Der Vielpolmagnet 4 und die zusammengefügten Joche 5 sind so angeordnet, dass die Mitte jedes Klauenpols der Magnetjoche 5 mit einer Magnetgrenzlinie (d. h. einer Grenze zwischen einem N-Pol und einem S-Pol) überein stimmt, um einen neutralen Punkt zu erhalten, bei dem das Ausgangssignal (die Ausgangsspannung) des Magnetfeldsensors Null wird, wenn der Drehstab nicht tordiert wird (d. h. wenn keine Lenkkraft zwischen der oberen Lenkwelle und der unteren Lenkwelle übertragen wird).

Ein Satz von Magnetflussleitern 6 leitet bzw. "sammelt" die von den Magnetjochen 5 erzeugten magnetischen Flüsse. Eine raumfeste Sensoreinheit 7 erfasst, die in einem Luftspalt zwischen den in Axialrichtung gegenüberliegenden Magnetflussleitern 6 erzeugte magnetische Flussdichte.

Die Sensoreinheit 7 weist ein erstes Gehäuse 8 auf und darin angeordnet einen Magnetflussleiter 9 und einen auf einer Leiterplatte 10 angeordneten Magnetsensor 11. Die Flussleiter 6,9 dienen zur Konzentrierung des magnetischen Flusses an dem Magnetsensor 11. Der Magnetsensor 11 detektiert die Verdrehung der mit Magnetring 4 verbunden oberen Lenkwelle 2 gegenüber der mit den Magnetjochen 5 und den Magnetflussleitern 6 verbundenen unteren Lenkwelle. Das erste Gehäuse 8 der Sensoreinheit 7 wird bei der Montage in ein zweites Gehäuse 12 der Drehmomentsensoreinheit 1 eingesetzt.

Das zweite Gehäuse 12 der Drehmomentsensoreinheit umgibt im montierten Zustand den Ringmagneten 4, den Satz Magnetjoche 5, die Flussleiter 6 und die Sensoreinheit 7. Das zweite Gehäuse 12 der Drehmomentsensoreinheit weist eine als Boden fungierende Grundfläche 120 auf, auf die eine als Rand dienende Außenwand 121 aufgesetzt ist, die im Wesentlichen senkrecht auf dem Boden 120 angeordnet ist. Die Außenwand 121 ist an dem Boden 120 bevorzugt angeschweißt. Der Boden 120 überragt in einem Bereich außerhalb des Sensorelementes 7 nach außen hin die Außenwand 121, so dass sich dort auf der Außenseite der Außenwand 121 ein Absatz 122 ausbildet. Die Außenwand 121 umschließt die gesamte Drehmomentsensoreinheit 1 umfangseitig. Das zweite Gehäuse 12 weist auf der bodenfernen Seite eine Öffnung 123 auf. Diese Öffnung 123 öffnet das Gehäuse 12 zur oberen Lenkwelle 2 hin. Die Öffnung 123 wird von einem Gehäusedeckel 13 abgedeckt. Der Gehäusedeckel 13 weist eine Ausnehmung 130 auf, die von der oberen Lenkwelle 2 im eingebauten Zustand durchsetzt ist. Der Gehäusedeckel 13 ist mit einem inneren Mantelrohr 14 einer Lenksäule verbunden, bevorzugt verschweißt. Das innere Mantelrohr 14 ist in die Ausnehmung 130 eingesetzt. Das innere Mantelrohr 14 ist Teil einer verstellbaren Lenksäule. Es ist von einem nicht dargestellten äußeren Mantelrohr umgeben, und die beiden Mantelrohre sind gegeneinander teleskopierbar ausgeführt.

Das zweite Gehäuse 12 weist eine Gehäuseöffnung 124 im Rand 121, im Bereich des Sensorelementes 7 auf. Durch die Gehäuseöffnung 124 kann das Sensorelement 7 mit einer Datenleitung und mit einer Stromversorgung verbunden werden.

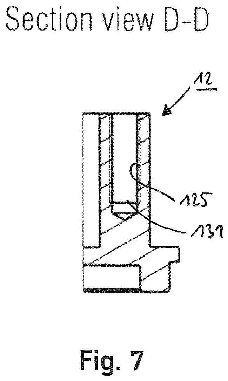

Der Gehäusedeckel 13 wird mittels Schrauben 131, wie in Figur 7 dargestellt, an dem zweiten Gehäuse 12 festgeschraubt. Dazu weist das zweite Gehäuse 12 im Bereich der Außenwand 121 Gewindebohrung 125 auf, die sich parallel zu einer Längsachse 100 der Drehmomentsensoreinheit 1 erstrecken. Die Gewindebohrungen 125 sind bevorzugt entlang des Umfangs gleichmäßig verteilt. Der Gehäusedeckel 13 weist zu den Gewindebohrungen 125 entsprechende Ausnehmungen 132 auf, die von den Schrauben 131 zum Einschrauben in die Gewindebohrungen 125 durchsetzt werden.

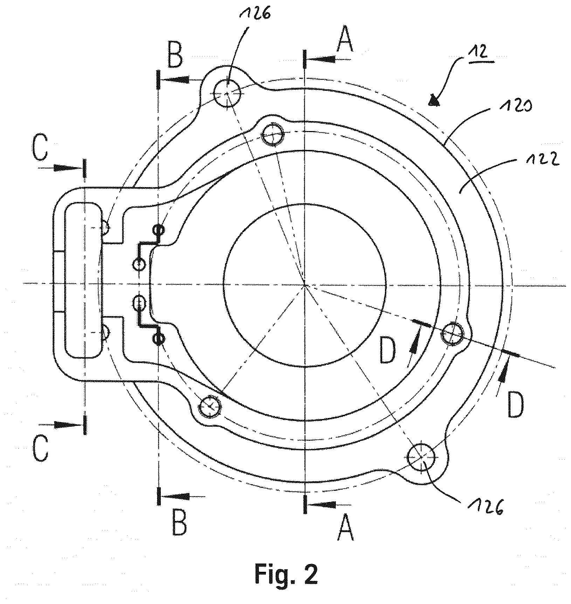

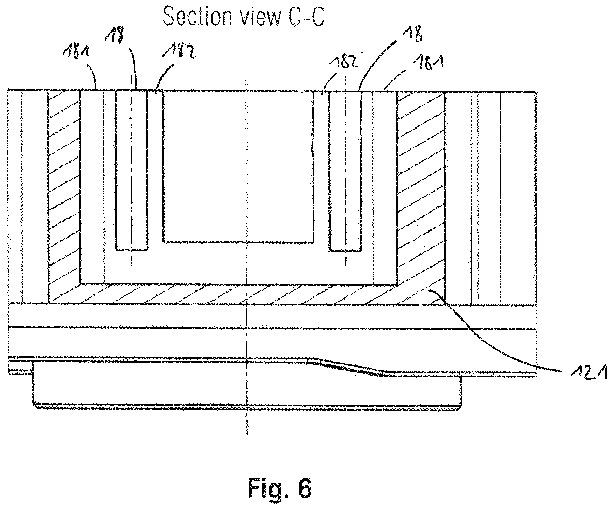

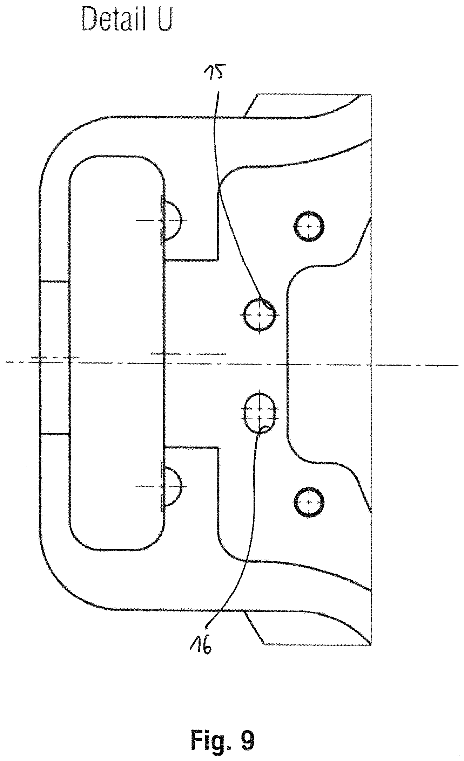

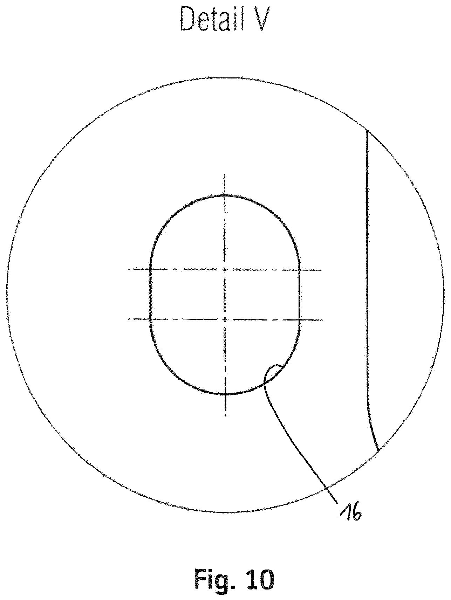

In den Figuren 2 bis 10 sind Details des zweiten Gehäuses 12 dargestellt.

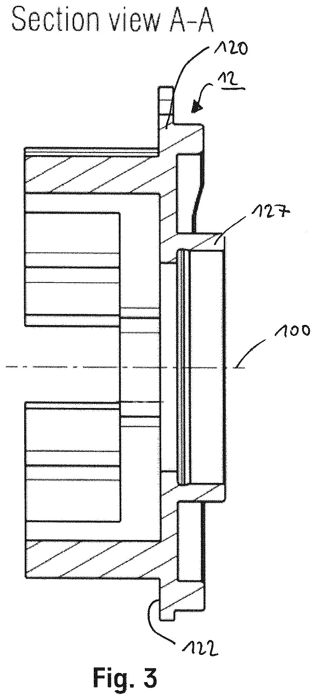

Wie in den Figur 2 und 3 dargestellt ist, weist der Boden 120 im Bereich des Absatzes 122 zwei weitere Gewindebohrungen 126 zur Befestigung des zweiten Gehäuses 12 an einem nicht dargestellten Getriebegehäuse auf. Neben den weiteren Gewindebohrungen 126 ist ein Flansch 127 zur Ausbildung einer Verbindung mit dem nicht dargestellten Getriebegehäuse vorgesehen. Das zweite Gehäuse 12 fungiert als Gehäusedeckel für das Getriebegehäuse.

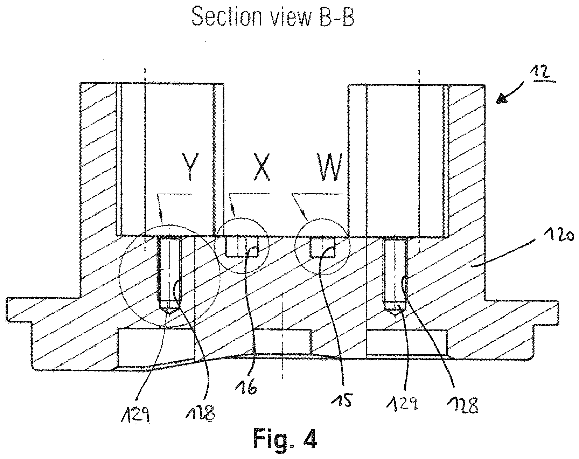

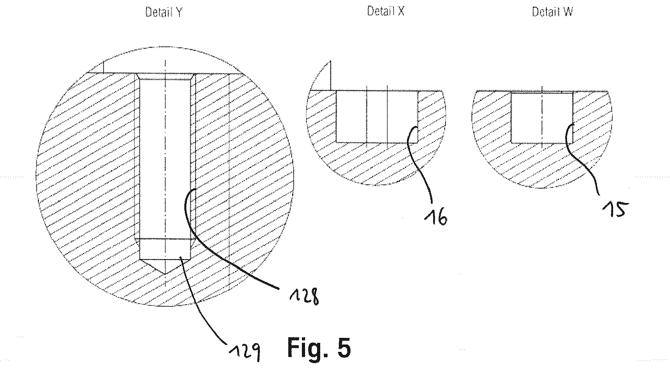

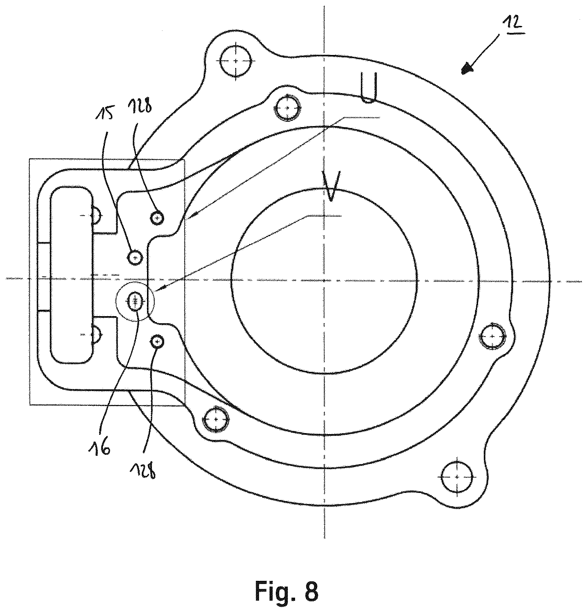

Das Sensorgehäuse 8 wird ebenfalls mittels Schrauben 129 an dem zweiten Gehäuse 12 befestigt. Wie in Figur 4 und im Detail in Figur 5 dargestellt ist, weist der Gehäuseboden 120 des zweiten Gehäuses 12 Gewindebohrungen 128 auf. Die Verbindungsschrauben 129 durchsetzten die in Figur 1 dargestellten Bohrungen 70 am Sensorgehäuse 7, um dann in die Gewindebohrungen 129 im Gehäuseboden 120 zu greifen. In dem Gehäuseboden 120 sind zusätzlich noch zwei Positionierungsbohrungen 15,16 vorgesehen. Sowohl die Positionierungsbohrungen 15,16 als auch die Gewindebohrungen 29 erstrecken sich parallel zur Gehäuselängsachse 100. In den Figuren 8 bis 10 sind die Positionierungsbohrungen 15,16 im Detail dargestellt. Eine der Bohrungen 16 ist im Querschnitt oval und die zweite Bohrung 15 ist im Querschnitt kreisrund ausgebildet. In die beiden Positionierungsbohrungen 15,16 greifen Positionierungsstifte ein, die an einer Rückseite des Sensorgehäuses 8 angebracht sind.

Die Sensoreinheit 7 ist von dem ersten Gehäuse 8 umgeben, dass einen ersten Bereich 81 aufweist, in dem der Flussleiter 9, die Leiterplatte 10 und der Magnetsensor 11 untergebracht sind. Dieser erste Bereich 81 des ersten Gehäuses 8 ist im montierten Zustand von einem nicht dargestellten Gehäusedeckel verschlossen. In einem zweiten Bereich 82, der sich an den ersten Bereich 81 anschließt, ist das erste Gehäuse 8 im Längsschnitt T-förmig ausgestaltet. Zur Bildung der T-Form weist das erste Gehäuse 8 einen Hals 83 auf, der sich im montierten Zustand der Sensoreinheit 7 in Radialrichtung der Längsachse 100 der Drehmomentsensoreinheit erstreckt und an den sich ein querliegender Steg 84 anschließt. Der querliegende Steg 84 ist plattenförmig und liegt im eingebauten Zustand auf beiden Seiten, jeweils auf einem Vorsprung 18 des Randes 121 des zweiten Gehäuses 12 auf. Je ein Vorsprung weist zwei Auflageflächen 181,182 auf, die eine Art Führung für das Einbringen der Sensoreinheit 7 bilden.

Das zweite Gehäuse 12, der Gehäusedeckel 13 und das innere Mantelrohr 14 sind aus einem magnetisch leitenden Werkstoff zur magnetischen Abschirmung der Drehmomentsensoreinheit 1 gefertigt. Die magnetische Abschirmung wird dabei durch eine geeignete Materialwahl der entsprechenden Bauteile sichergestellt. Bevorzugt sind die Bauteile 12,13,14 aus einem weichmagnetischen Material mit hoher magnetischer Leitfähigkeit und kleiner Koerzitivfeldstärke, insbesondere ferritischem Stahl, hergestellt. Mit Hilfe dieser Abschirmung ist es möglich, die Feldlinien von externen magnetischen Feldern um die Drehmomentsensoreinheit 1 herumzulenken und somit die Beeinflussung des Drehmomentsensors durch Störfelder, ganz oder wenigstens zu einem erheblichen Teil zu unterbinden. Die Abschirmung ist nicht dazu vorgesehen, die magnetischen Felder zwischen den Bauteilen der Drehmomentsensoreinheit bzw. der integralen Baueinheit zu begrenzen. Sie schützt die gesamte Drehmomentsensoreinheit vor externen Einflüssen.

## Patentansprüche

1. Elektromechanisches Lenksystem für ein Kraftfahrzeug umfassend ein mit einer zweiten Teilwelle verbundenes Lenkritzel, welches mit einer in einem dritten Gehäuse entlang einer Längsachse verschieblich gelagerten Zahnstange zur Lenkung von Rädern in Eingriff steht, wenigstens einen Elektromotor zur Lenkkraftunterstützung, eine Drehmomentsensoreinheit (1), die zwischen einer mit dem Lenkrad verbundenen ersten Teilwelle (2) und der zweiten Teilwelle angeordnet ist und ein vom Fahrer in das Lenkrad eingebrachtes Drehmoment erfasst, wobei eine die erste Teilwelle (2) und die zweite Teilwelle umfassende Lenksäule teleskopierbar ist und ein äußeres Mantelrohr sowie ein inneres Mantelrohr (14) aufweist, die Drehmomentsensoreinheit (1) umfassend:
- einen drehfest mit der ersten Teilwelle (2) verbindbaren Ringmagneten (4),
- wenigstens ein mit der zweiten Teilwelle verbindbares Magnetjoch (5), das in einem von dem Ringmagneten (4) ausgehenden magnetischen Feld angeordnet ist und
- wenigstens zwei mit der zweiten Teilwelle verbindbare Magnetflussleiter (6), die die von dem wenigstens einen Magnetjoch (5) erzeugten magnetischen Flüsse leiten,
- eine Sensoreinheit (7) mit einem ersten Gehäuse (8), die eine Drehwinkeländerung zwischen den Teilwellen (2) durch Messung der zwischen den Magnetflussleitern (6) erzeugten magnetischen Flussdichte detektiert,
- ein zweites Gehäuse (12), das den Ringmagneten (4), das wenigstens eine Magnetjoch (5), die wenigstens zwei Magnetflussleiter (6) und die Sensoreinheit (7) umgibt und das eine Gehäuseöffnung (123) aufweist, die von einem Gehäusedeckel (13) zumindest teilweise verschlossen ist, **dadurch gekennzeichnet, dass** das zweite Gehäuse (12) und der Gehäusedeckel (13) aus einem magnetisch leitenden Material zur magnetischen Abschirmung der Drehmomentsensoreinheit (1) gefertigt sind, und dass der Gehäusedeckel (13) eine Ausnehmung (130) aufweist, die von der ersten Teilwelle (2) im eingebauten Zustand durchsetzt ist und in die das innere Mantelrohr (14) aufgenommen ist, wobei das innere Mantelrohr (14) aus einem magnetisch leitenden Werkstoff zur magnetischen Abschirmung der Drehmomentsensoreinheit (1) gefertigt ist.

2. Elektromechanisches Lenksystem nach Anspruch 1, **dadurch gekennzeichnet, dass** das innere Mantelrohr (14) mit dem Gehäusedeckel (13) verschweißt ist.

3. Elektromechanisches Lenksystem nach einem der vorhergehenden Ansprüche, **dadurch gekennzeichnet, dass** das Material ferritischen Stahl umfasst.

4. Elektromechanisches Lenksystem nach einem der vorhergehenden Ansprüche, **dadurch gekennzeichnet, dass** die Sensoreinheit (7) wenigstens einen Magnetflussleiter (9) und einen auf einer Leiterplatte (10) angeordneten Magnetsensor (11) umfasst, die in einem ersten Gehäuse (8) untergebracht sind.

5. Elektromechanisches Lenksystem nach einem der vorhergehenden Ansprüche, **dadurch gekennzeichnet, dass** der Gehäusedeckel (13) mittels Schrauben (131) an einer Außenwand des zweiten Gehäuses (121) befestigt ist.

6. Elektromechanisches Lenksystem nach einem der vorhergehenden Ansprüche, **dadurch gekennzeichnet, dass** das Sensorgehäuse (8) mittels Schrauben (129) an einer Grundplatte des zweiten Gehäuses (120) befestigt ist.

7. Elektromechanisches Lenksystem nach einem der vorhergehenden Ansprüche, **dadurch gekennzeichnet, dass** das zweite Gehäuse (12) eine Gehäuseöffnung (124) im Bereich des Sensorelementes (7) zur Durchführung von einer Datenleitung und/oder einer Stromversorgung aufweist.

8. Elektromechanisches Lenksystem nach einem der vorhergehenden Ansprüche, **dadurch gekennzeichnet, dass** an einer der öffnungfernen Seite der Grundplatte (120) des zweiten Gehäuses ein Flansch (127) zur Befestigung des zweiten Gehäuses (12) an einem Getriebegehäuse vorgesehen ist.

9. Elektromechanisches Lenksystem nach Anspruch 8, **dadurch gekennzeichnet, dass** der Elektromotor an der Lenksäule angeordnet ist und mittels des in dem Getriebegehäuse angeordneten Getriebes eine Hilfskraftunterstützung in die untere Teilwelle einleitet.

## Claims

1. An electromechanical steering system for a motor vehicle, comprising a steering pinion which is connected to a second partial shaft and which is in engagement with a rack for steering wheels, wherein the rack is mounted such that it can be displaced along a longitudinal axis in a third housing, at least one electric motor for steering force assistance, a torque sensor unit (1), which is arranged between a first partial shaft (2) connected to the steering wheel and the second partial shaft and detects a torque introduced into the steering wheel by the driver, wherein a steering column comprising the first partial shaft (2) and the second partial shaft is telescopic and has an outer casing tube and an inner casing tube (14), the torque sensor unit (1) comprising:
- a ring magnet (4) which can be connected to the first partial shaft (2) in a torque-proof manner,
- at least one magnetic yoke (5) which can be connected to a second partial shaft and which is arranged in a magnetic field originating from the ring magnet (4), and
- at least two magnetic flux conductors (6) which can be connected to the second partial shaft and which conduct the magnetic fluxes generated by the at least one magnetic yoke (5),
- a sensor unit (7) having a first housing (8), which detects a change in rotational angle between the partial shafts (2) by measuring the magnetic flux density generated between the magnetic flux conductors (6),
- a second housing (12), which surrounds the ring magnet (4), the at least one magnetic yoke (5), the at least two magnetic flux conductors (6) and the sensor unit (7) and which has a housing opening (123) which is at least partly closed by a housing cover (13), **characterized in that** the second housing (12) and the housing cover (13) are made of a magnetically conductive material for the magnetic shielding of the torque sensor unit (1), and **in that** the housing cover (13) has a cutout (130), through which the first partial shaft (2) passes when installed and in which an inner casing tube (14) is accommodated, wherein the inner casing tube (14) is made of a magnetically conductive material for the magnetic shielding of the torque sensor unit (1).

2. The electromechanical steering system as claimed in claim 1, **characterized in that** the inner casing tube (14) is welded to the housing cover (13).

3. The electromechanical steering system as claimed in one of the preceding claims, **characterized in that** the material comprises ferritic steel.

4. The electromechanical steering system unit as claimed in one of the preceding claims, **characterized in that** the sensor unit (7) comprises at least one magnetic flux conductor (9) and a magnetic sensor (11) arranged on a circuit board (10), which are accommodated in a first housing (8).

5. The electromechanical steering system unit as claimed in one of the preceding claims, **characterized in that** the housing cover (13) is fixed by means of screws (131) to an outer wall of the second housing (121).

6. The torque sensor unit as claimed in one of the preceding claims, **characterized in that** the sensor housing (8) is fixed by means of screws (129) to a base plate of the second housing (120).

7. The electromechanical steering system unit as claimed in one of the preceding claims, **characterized in that** the second housing (12) has a housing opening (124) in the area of the sensor element (7) for a data line and/or a power supply to be led through.

8. The electromechanical steering system unit as claimed in one of the preceding claims, **characterized in that** a flange (127) for fixing the second housing (12) to a transmission housing is provided on a side of the base plate (120) of the second housing that is remote from the opening.

9. The electromechanical steering system as claimed in claim 8, **characterized in that** the electric motor is arranged on the steering column and introduces power steering assistance into the lower partial shaft by means of the transmission arranged in the transmission housing.

## Revendications

1. Système de direction électromécanique pour un véhicule à moteur, comprenant un pignon de direction qui est relié à un deuxième arbre partiel et qui est en prise avec une crémaillère pour roues directrices, dans lequel la crémaillère est montée de manière à pouvoir être déplacée le long d'un axe longitudinal dans un troisième boîtier, au moins un moteur électrique pour l'assistance à la force de direction, une unité de capteur de couple (1), qui est disposé entre un premier arbre partiel (2) relié au volant et le deuxième arbre partiel et qui détecte un couple introduit dans le volant par le conducteur, dans lequel une colonne de direction comprenant le premier arbre partiel (2) et le deuxième arbre partiel est télescopique et a un tube de boîtier extérieur et un tube de boîtier intérieur (14), l'unité de capteur de couple (1) comprenant :
- un aimant annulaire (4) qui peut être relié au premier arbre partiel (2) de manière étanche au couple,
- au moins une culasse magnétique (5) qui peut être reliée à un deuxième arbre partiel et qui est disposée dans un champ magnétique provenant de l'aimant annulaire (4), et
- au moins deux conducteurs de flux magnétique (6) qui peuvent être reliés au deuxième arbre partiel et qui conduisent les flux magnétiques générés par au moins une culasse magnétique (5),
- un capteur (7) doté d'un premier boîtier (8), qui détecte un changement d'angle de rotation entre les arbres partiels (2) en mesurant la densité du flux magnétique généré entre les conducteurs de flux magnétique (6),
- un deuxième boîtier (12), qui entoure l'aimant annulaire (4), au moins une culasse magnétique (5), au moins deux conducteurs de flux magnétique (6) et l'unité de capteur (7) et qui présente une ouverture de boîtier (123) au moins partiellement fermée par un couvercle de boîtier (13), **caractérisé en ce que** le deuxième boîtier (12) et le couvercle de boîtier (13) sont constitués d'un matériau magnétiquement conducteur pour le blindage magnétique de l'unité de capteur de couple (1), et **en ce que** le couvercle du boîtier (13) présente une découpe (130), à travers laquelle le premier arbre partiel (2) passe lorsqu'il est installé et dans laquelle un tube de boîtier intérieur (14) est logé, le tube de boîtier intérieur (14) étant constitué d'un matériau magnétiquement conducteur pour le blindage magnétique de l'unité de capteur de couple (1).

2. Système de direction électromécanique selon la revendication 1, **caractérisé en ce que** le tube intérieur du boîtier (14) est soudé au couvercle du boîtier (13).

3. Système de direction électromécanique selon l'une des revendications précédentes, **caractérisé en ce que** le matériau comprend de l'acier ferritique.

4. Système de direction électromécanique selon l'une des revendications précédentes, **caractérisé en ce que** l'unité de détection (7) comprend au moins un conducteur de flux magnétique (9) et un capteur magnétique (11) disposés sur une carte de circuit imprimé (10), qui sont logés dans un premier boîtier (8).

5. Système de direction électromécanique selon l'une des revendications précédentes, **caractérisé en ce que** le couvercle du boîtier (13) est fixé au moyen de vis (131) à une paroi extérieure du second boîtier (121).

6. Système de direction électromécanique selon l'une des revendications précédentes, **caractérisé en ce que** le boîtier du capteur (8) est fixé au moyen de vis (129) à une plaque de base du second boîtier (120).

7. Système de direction électromécanique selon l'une des revendications précédentes, **caractérisé en ce que** le second boîtier (12) comporte une ouverture (124) dans la zone de l'élément capteur (7) pour le passage d'une ligne de données et/ou d'une alimentation électrique.

8. Système de direction électromécanique selon l'une des revendications précédentes, **caractérisé en ce qu'**une bride (127) pour la fixation du second boîtier (12) à un boîtier de transmission est prévue sur un côté de la plaque de base (120) du second boîtier qui est éloigné de l'ouverture.

9. Système de direction électromécanique selon la revendication 8, **caractérisé en ce que** le moteur électrique est disposé sur la colonne de direction et introduit l'assistance de direction dans l'arbre partiel inférieur au moyen de la transmission disposée dans le boîtier de transmission.
